# EUROPEAN PATENT APPLICATION

(11) **EP 4 827 155 A1**
(43) Date of publication of application: **21.10.2026**
(21) Application number: 24902381.3
(22) Date of filing: 28.10.2024
(51) Int. Cl.: H04W 24/04

(54) **NON-TERRESTRIAL NETWORK COMMUNICATION METHOD AND RELATED APPARATUS**

(30) Priority: 11.12.2023 CN 202311708953
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN); ZHONG, Yaping, Shenzhen, Guangdong 518129 (CN)
(74) Representative: Huawei European IPR
(86) International application number: PCT/CN2024/127701
(87) International publication number: WO 2025/123957

(57) **Abstract**

Embodiments of this application provide a non-terrestrial network communication method and a related apparatus. The method includes: A first network device obtains first configuration information of a first cell, where the first cell is a cell of the first network device; and the first network device sends the first configuration information to a second network device, where the first configuration information includes a first identifier and/or related information of a physical broadcast channel PBCH of the first cell, and the first identifier identifies system information of the first cell. In a regenerative satellite working scenario, handover without L3 signaling is implemented, to reduce signaling overheads, avoid a signaling storm caused by handover, and improve communication efficiency.

## Description

This application claims priority to Chinese Patent Application No. 202311708953.9, filed with the China National Intellectual Property Administration on December 11, 2023 and entitled "NON-TERRESTRIAL NETWORK COMMUNICATION METHOD AND RELATED APPARATUS", which is incorporated herein by reference in its entirety.

### TECHNICAL FIELD

This application relates to the field of communication technologies, and in particular, to a non-terrestrial network communication method and a related apparatus.

### BACKGROUND

A non-terrestrial network (non-terrestrial network, NTN) is a communication network implemented by using a non-terrestrial network device. An NTN system may include an air network device like a satellite system or a high altitude platform station (high altitude platform station, HAPS) communication system. The NTN has advantages of wide coverage, a long communication distance, high reliability, high flexibility, a high throughput, and the like, and is not affected by a geographical environment, a climate condition, and a natural disaster. Therefore, the NTN has been widely applied to various fields. Introducing NTN communication to mobile network communication, for example, 5th generation (5th Generation, 5G) communication, can improve user experience. A satellite network is used as an example. Satellites may be classified into a low earth orbit (Low Earth Orbit, LEO) satellite, a medium earth orbit (medium earth orbit, MEO) satellite, and a geostationary orbit (geostationary orbit, GEO) satellite based on orbit altitudes. A satellite operating in a geostationary orbit is stationary relative to the ground, and satellites operating in a low orbit and a medium orbit move at a high speed relative to the ground. Therefore, the low orbit and the medium orbit may also be referred to as non-geostationary satellite orbits (NGSOs).

For the satellite operating in the NGSO, because the satellite moves at a high speed relative to the ground, coverage duration of a satellite beam for a specific area on the ground is short. Consequently, a terminal device needs to frequently change a serving cell. However, frequent handover of the terminal device between different satellites causes huge signaling overheads. Therefore, in an NGSO scenario, the huge signaling overheads caused by frequent handover of the terminal device become a key factor affecting communication efficiency of the NTN system.

### SUMMARY

According to a first aspect, an embodiment of this application provides a non-terrestrial network communication method, where the method is applied to a first network device, and the method includes: The first network device obtains first configuration information of a first cell, where the first cell is a cell of the first network device; and the first network device sends the first configuration information to a second network device, where the first configuration information includes a first identifier and/or related information of a physical broadcast channel PBCH of the first cell, and the first identifier identifies system information of the first cell.

The first network device in this embodiment of this application may also be referred to as a source network device. The first cell of the first network device is a cell that currently provides a communication service for a terminal device. The first cell may also be referred to as a source cell. The terminal device needs to be handed over from the first cell to a second cell, where the second cell is a cell of a second network device, the second cell may also be referred to as a target cell, and the second network device may also be referred to as a target network device.

In a possible implementation, after an Xn interface between the first network device and the second network device is set up, the first network device sends the first configuration information to the second network device, where the Xn interface is an interface between network devices. For example, the first configuration information is carried in an Xn interface setup request sent by the first network device to the second network device, where the Xn interface setup request is used to request to set up the Xn interface between the first network device and the second network device. For another example, the second network device sends an Xn interface setup request to the first network device, and the first configuration information is carried in an Xn interface setup request response that is fed back by the first network device to the second network device. For example, the Xn interface setup request may be an "XN SETUP REQUEST" message, and the Xn interface setup request response may be an "XN SETUP RESPONSE" message.

In another possible implementation, when the first network device sends a handover request message to the second network device, the first configuration information is carried in the handover request message. The first network device determines the handover request message based on a measurement report reported by the terminal device, where the handover request message indicates that there is a terminal device that needs to be handed over from the first network device to the second network device. For example, the handover request message may be a "HANDOVER REQUEST" message.

In this embodiment of this application, the first configuration information related to the first cell is sent to the second network device, so that configuration information of the second cell matches configuration information of the first cell. It is ensured that the terminal device can be handed over from the first cell to the second cell by using a handover without L3 signaling procedure. In a regenerative satellite working scenario, handover without L3 signaling is implemented, to reduce signaling overheads, avoid a signaling storm caused by handover, and improve communication efficiency.

With reference to the first aspect, in a possible implementation of the first aspect, the related information of the PBCH of the first cell includes any one or more of the following: four least significant bits bits of a system frame number; an absolute time corresponding to a system frame number of the first cell; one most significant bit of an offset of a synchronization signal block SSB subcarrier, where the offset of the SSB subcarrier indicates a subcarrier offset of an SSB between a subcarrier 0 of a common resource block CRB and a subcarrier 0 of the SSB; a quantity of SSBs of the first cell; or half-frame indication information, where the half-frame indication information indicates whether an SSB is carried in a first half frame or a second half frame. In this embodiment of this application, the related information of the PBCH of the first cell includes a plurality of types of information, to improve implementation flexibility of the solution.

With reference to the first aspect, in a possible implementation of the first aspect, the first identifier is a value tag value tag, and the system information of the first network device includes a system information block SIB.

With reference to the first aspect, in a possible implementation of the first aspect, the method further includes: The first network device sends second configuration information to the second network device, where the second configuration information includes configuration information related to the terminal device, the terminal device is served by the first network device, and the second cell corresponding to the second network device is a to-be-handed-over cell of the terminal device.

In this embodiment of this application, the first network device may further send the configuration information related to the terminal device to the second network device, so that the second network device applies the second configuration information to provide a communication service for the terminal device in the second cell. The second network device does not need to resynchronize the configuration information of the terminal device with the terminal device, to ensure that the terminal device can be handed over from the first cell to the second cell by using the handover without L3 signaling procedure. In a regenerative satellite working scenario, handover without L3 signaling is implemented, to reduce signaling overheads, avoid a signaling storm caused by handover, and improve communication efficiency.

With reference to the first aspect, in a possible implementation of the first aspect, the method further includes: The first network device sends third configuration information to the second network device, where the third configuration information is configuration information related to random access in a system information block SIB1 of the second cell. In this way, after the second network device obtains the third configuration information, the second network device applies the third configuration information, that is, applies the RACH-related configuration. The second network device may apply the third configuration information before UE initiates access, for example, apply the third configuration information at a time indicated by first time information. The terminal device accesses the second cell based on the original RACH-related configuration.

With reference to the first aspect, in a possible implementation of the first aspect, the second configuration information includes any one or more of the following: a key KgNB, where the key KgNB is used to determine a key of an access stratum; a cell radio network temporary identifier C-RNTI; a mapping relationship between a quality of service QoS flow and a data radio bearer DRB that are related to the terminal device; capability information of the terminal device; radio resource management RRM measurement configuration information; related information of a protocol data unit PDU session related to the terminal device; or information other than a system information block SIB1 and a master information block MIB in a synchronization reconfiguration reconfigurationWithSync message. In this embodiment of this application, the second configuration information includes a plurality of types of information, to improve implementation flexibility of the solution.

With reference to the first aspect, in a possible implementation of the first aspect, the first configuration information includes any one or more of the following: identifier information of the first cell; access stratum configuration information of the first cell; a system information block SIB1 of the first cell; or a master information block MIB of the first cell. In this embodiment of this application, the second configuration information includes a plurality of types of information, to improve implementation flexibility of the solution.

With reference to the first aspect, in a possible implementation of the first aspect, the third configuration information includes any one or more of the following information: a random access-common configuration rach-ConfigCommon information element, or a synchronization signal block-burst position ssb-PositionsInBurst information element, where the rach-ConfigCommon information element includes any one or more of the following information: a random access RACH parameter for random access or beam recovery, a parameter for sending a preamble preamble, or a mapping relationship between a preamble and a synchronization signal block; and the ssb-PositionsInBurst information element includes time information for sending a synchronization signal block. In this embodiment of this application, the third configuration information includes a plurality of types of information, to improve implementation flexibility of the solution.

With reference to the first aspect, in a possible implementation of the first aspect, the method further includes: The first network device sends first indication information to the terminal device, where the first indication information indicates that the terminal device is handed over from the first cell to the second cell in a handover without L3 signaling mode, the second cell corresponding to the second network device is the to-be-handed-over cell of the terminal device, and identifier information of a current serving cell of the terminal device in the handover without L3 signaling mode is the same as identifier information of the to-be-handed-over cell of the terminal device; and the first network device sends second indication information to the second network device, where the second indication information indicates the second network device to use the handover without L3 signaling mode.

With reference to the first aspect, in a possible implementation of the first aspect, the method further includes: The first network device sends the first time information to the terminal device, where the first time information indicates an application time of applying the handover without L3 signaling mode.

According to a second aspect, an embodiment of this application provides a non-terrestrial network communication method, where the method is applied to a second network device, and the method includes: The second network device receives first configuration information sent by a first network device, where the first configuration information includes a first identifier and/or related information of a physical broadcast channel PBCH of a first cell, the first identifier identifies system information of the first cell, and the first cell is a cell of the first network device; and the second network device applies the first configuration information to provide a communication service for a terminal device in a second cell, where the terminal device is served by the first network device, and the second cell is a to-be-handed-over cell of the terminal device.

In a possible implementation, after an Xn interface between the first network device and the second network device is set up, the first network device sends the first configuration information to the second network device, where the Xn interface is an interface between network devices. For example, the first configuration information is carried in an Xn interface setup request sent by the first network device to the second network device, where the Xn interface setup request is used to request to set up the Xn interface between the first network device and the second network device. For another example, the second network device sends an Xn interface setup request to the first network device, and the first configuration information is carried in an Xn interface setup request response that is fed back by the first network device to the second network device. For example, the Xn interface setup request may be an "XN SETUP REQUEST" message, and the Xn interface setup request response may be an "XN SETUP RESPONSE" message.

In another possible implementation, when the first network device sends a handover request message to the second network device, the first configuration information is carried in the handover request message. The first network device determines the handover request message based on a measurement report reported by the terminal device, where the handover request message indicates that there is a terminal device that needs to be handed over from the first network device to the second network device. For example, the handover request message may be a "HANDOVER REQUEST" message.

In this embodiment of this application, the first configuration information related to the first cell is sent to the second network device, so that configuration information of the second cell matches configuration information of the first cell. It is ensured that the terminal device can be handed over from the first cell to the second cell by using a handover without L3 signaling procedure. In a regenerative satellite working scenario, handover without L3 signaling is implemented, to reduce signaling overheads, avoid a signaling storm caused by handover, and improve communication efficiency.

With reference to the second aspect, in a possible implementation of the second aspect, that the second network device applies the first configuration information to provide the communication service for the terminal device in the second cell includes: The second network device generates system information of the second cell based on the first configuration information; and the second network device sends the system information of the second cell to the terminal device.

In this embodiment of this application, the second network device generates the system information of the second cell based on the first configuration information, and then sends the system information of the second cell to the terminal device, so that the terminal device initiates access to the second cell based on the system information of the second cell.

With reference to the second aspect, in a possible implementation of the second aspect, the method further includes: The second network device receives the first identifier sent by the first network device, where the first identifier identifies system information of the first network device; the second network device determines a second identifier based on the first identifier, where the second identifier identifies system information of the second network device, and the second identifier is inconsistent with the first identifier; and the second network device sends the second identifier to the terminal device.

In this embodiment of this application, the second network device sends the second identifier, so that the terminal device learns that the system information of the second cell needs to be read and applied. In a process in which the terminal device is handed over from the first cell to the second cell, the terminal device only needs to re-read the system information of the second cell, and a configuration of the terminal device can match a configuration of the second cell without updating terminal device-level configuration information. In a regenerative satellite working scenario, handover without L3 signaling is implemented, to reduce signaling overheads, avoid a signaling storm caused by handover, and improve communication efficiency.

With reference to the second aspect, in a possible implementation of the second aspect, that the second network device sends the second identifier to the terminal device includes: The second network device sends the system information of the second cell to the terminal device, where the system information of the second cell includes the second identifier.

Optionally, the second network device may further send third indication information to the terminal device, where the third indication information is used to notify the terminal device that system information of a cell changes. For example, the third indication information is carried in a short message (short message). The second network device sets a bit corresponding to the short message to indicate to the terminal device that the system information of the cell changes.

With reference to the second aspect, in a possible implementation of the second aspect, the first identifier is a value tag value tag, and the system information of the first cell includes a system information block SIB; and the second identifier is a value tag value tag, and the system information of the second cell includes a system information block SIB.

With reference to the second aspect, in a possible implementation of the second aspect, the method further includes: The second network device receives second configuration information sent by the first network device, where the second configuration information includes configuration information related to the terminal device; and the second network device applies the second configuration information to provide a communication service for the terminal device in the second cell.

In this embodiment of this application, the first network device may further send the configuration information related to the terminal device to the second network device, so that the second network device applies the second configuration information to provide a communication service for the terminal device in the second cell. The second network device does not need to resynchronize the configuration information of the terminal device with the terminal device, to ensure that the terminal device can be handed over from the first cell to the second cell by using the handover without L3 signaling procedure. In a regenerative satellite working scenario, handover without L3 signaling is implemented, to reduce signaling overheads, avoid a signaling storm caused by handover, and improve communication efficiency.

With reference to the second aspect, in a possible implementation of the second aspect, the method further includes: The second network device receives third configuration information sent by the first network device, where the third configuration information is configuration information related to random access in a system information block SIB1 of the second cell; and the second network device applies the third configuration information to provide a communication service for the terminal device in the second cell. In this way, after the second network device obtains the third configuration information, the second network device applies the third configuration information, that is, applies the RACH-related configuration. The second network device may apply the third configuration information before UE initiates access, for example, apply the third configuration information at a time indicated by first time information. The terminal device accesses the second cell based on the original RACH-related configuration.

According to a third aspect, an embodiment of this application provides a non-terrestrial network communication method, where the method is applied to a terminal device, and the method includes: receiving first indication information sent by a first network device, where the first indication information indicates that a first cell of the first network device supports the terminal device to be handed over from the first cell of the first network device to a second cell of a second network device in a handover without L3 signaling mode, and the second cell is a to-be-handed-over cell of the terminal device; and reading, by the terminal device, system information of the second cell sent by the second network device.

In this embodiment of this application, after the second network device sends the system information of the second cell to the terminal device, the terminal device reads and applies the system information of the second cell. It is ensured that a configuration of the terminal device matches a configuration of the second cell. In a regenerative satellite working scenario, handover without L3 signaling is implemented, to reduce signaling overheads, avoid a signaling storm caused by handover, and improve communication efficiency.

With reference to the third aspect, in a possible implementation of the third aspect, that the terminal device reads the system information of the second cell sent by the second network device includes: receiving a second identifier sent by the second network device, where the second identifier identifies the system information of the second cell; detecting whether the second identifier is consistent with a first identifier locally stored by the terminal device, where the first identifier identifies system information of the first cell; and if the second identifier is inconsistent with the first identifier, the terminal device reads the system information of the second cell sent by the second network device.

In this embodiment of this application, the second network device sends the second identifier, so that the terminal device learns that the system information of the second cell needs to be read and applied. In a process in which the terminal device is handed over from the first cell to the second cell, the terminal device only needs to re-read the system information of the second cell, and a configuration of the terminal device can match a configuration of the second cell without updating terminal device-level configuration information. In a regenerative satellite working scenario, handover without L3 signaling is implemented, to reduce signaling overheads, avoid a signaling storm caused by handover, and improve communication efficiency.

With reference to the third aspect, in a possible implementation of the third aspect, that the terminal device reads the system information of the second cell sent by the second network device includes: receiving a second identifier sent by the second network device, where the second identifier identifies the system information of the second cell; and ignoring the second identifier, and reading, by the terminal device, the system information of the second cell sent by the second network device. In this embodiment of this application, after the terminal device receives the second identifier sent by the second network device, the terminal device directly reads the system information of the second cell without identifying the second identifier, so that the terminal device obtains the configuration information related to the second cell. This improves communication efficiency.

With reference to the third aspect, in a possible implementation of the third aspect, the method further includes: The terminal device accesses the second cell at a time indicated by first time information in response to the first indication information, where the first indication information includes the first time information.

With reference to the third aspect, in a possible implementation of the third aspect, the first time information indicates any one of the following times: a time at which the first cell stops providing a service, where the first cell is a cell for which the first network device provides a communication service, and the first cell provides a communication service for the terminal device; an application time at which a target base station applies a handover mode of a handover without L3 signaling procedure; or a time at which the second cell starts to provide a service.

According to a fourth aspect, an embodiment of this application provides a communication apparatus. The communication apparatus is used in a first network device, and the communication apparatus includes a transceiver module and a processing module.

The transceiver module is configured to obtain first configuration information of a first cell, where the first cell is a cell of the first network device; and
the transceiver module is further configured to send the first configuration information to a second network device, where the first configuration information includes a first identifier and/or related information of a physical broadcast channel PBCH of the first cell, and the first identifier identifies system information of the first cell.

In a possible example, the related information of the PBCH of the first cell includes any one or more of the following:
four least significant bits bits of a system frame number;
an absolute time corresponding to a system frame number of the first cell;
one most significant bit of an offset of a synchronization signal block SSB subcarrier, where the offset of the SSB subcarrier indicates a subcarrier offset of an SSB between a subcarrier 0 of a common resource block CRB and a subcarrier 0 of the SSB;
a quantity of SSBs of the first cell; or
half-frame indication information, where the half-frame indication information indicates whether an SSB is carried in a first half frame or a second half frame.

In a possible example, the first identifier is a value tag value tag, and system information of the first network device includes a system information block SIB.

In a possible example, the communication apparatus further includes:
the transceiver module is further configured to send second configuration information to the second network device, where the second configuration information includes configuration information related to a terminal device, the terminal device is served by the first network device, and a second cell corresponding to the second network device is a to-be-handed-over cell of the terminal device.

In a possible example, the communication apparatus further includes:
the transceiver module is further configured to send third configuration information to the second network device, where the third configuration information is configuration information related to random access in a system information block SIB1 of the second cell.

In a possible example, the second configuration information includes any one or more of the following:
a key KgNB, where the key KgNB is used to determine a key of an access stratum;
a cell radio network temporary identifier C-RNTI;
a mapping relationship between a quality of service QoS flow and a data radio bearer DRB that are related to the terminal device;
capability information of the terminal device;
radio resource management RRM measurement configuration information;
related information of a protocol data unit PDU session related to the terminal device; or
information other than a system information block SIB1 and a master information block MIB in a synchronization reconfiguration reconfigurationWithSync message.

In a possible example, the first configuration information includes any one or more of the following:
identifier information of the first cell;
access stratum configuration information of the first cell;
a system information block SIB1 of the first cell; or
a master information block MIB of the first cell.

In a possible example, the third configuration information includes any one or more of the following information:
a random access-common configuration rach-ConfigCommon information element, or a synchronization signal block-burst position ssb-PositionsInBurst information element, where
the rach-ConfigCommon information element includes any one or more of the following information: a random access RACH parameter for random access or beam recovery, a parameter for sending a preamble preamble, or a mapping relationship between a preamble and a synchronization signal block; and
the ssb-PositionsInBurst information element includes time information for sending a synchronization signal block.

According to a fifth aspect, an embodiment of this application provides a communication apparatus, where the communication apparatus is used in a second network device, and the communication apparatus includes a transceiver module and a processing module.

The transceiver module is further configured to receive first configuration information sent by a first network device, where the first configuration information includes a first identifier and/or related information of a physical broadcast channel PBCH of a first cell, the first identifier identifies system information of the first cell, and the first cell is a cell of the first network device.

The processing module is configured to provide a communication service for a terminal device in a second cell by using the first configuration information, where the terminal device is served by the first network device, and the second cell is a to-be-handed-over cell of the terminal device.

In a possible example,
the processing module is further configured to generate system information of the second cell based on the first configuration information; and
the transceiver module is further configured to send the system information of the second cell to the terminal device.

In a possible example,
the transceiver module is further configured to receive the first identifier sent by the first network device, where the first identifier identifies system information of the first network device.

The processing module is further configured to determine a second identifier based on the first identifier, where the second identifier identifies system information of the second network device, and the second identifier is inconsistent with the first identifier.

The second network device sends the second identifier to the terminal device.

In a possible example,
the transceiver module is further configured to send the system information of the second cell to the terminal device, where the system information of the second cell includes the second identifier.

In a possible example, the first identifier is a value tag value tag, and the system information of the first cell includes a system information block SIB; and
the second identifier is a value tag value tag, and the system information of the second cell includes a system information block SIB.

In a possible example,
the transceiver module is further configured to receive second configuration information sent by the first network device, where the second configuration information includes configuration information related to the terminal device.

The processing module is further configured to provide a communication service for the terminal device in the second cell by using the second configuration information.

In a possible example,
the transceiver module is further configured to receive third configuration information sent by the first network device, where the third configuration information is configuration information related to random access in a system information block SIB1 of the second cell.

The processing module is further configured to provide a communication service for the terminal device in the second cell by using the third configuration information.

In a possible example, the first configuration information includes any one or more of the following:
identifier information of the first cell;
access stratum configuration information of the first cell;
a system information block SIB1 of the first cell; or
a master information block MIB of the first cell.

In a possible example, the second configuration information includes any one or more of the following:
a key KgNB, where the key KgNB is used to determine a key of an access stratum;
a cell radio network temporary identifier C-RNTI;
a mapping relationship between a quality of service QoS flow and a data radio bearer DRB that are related to the terminal device;
capability information of the terminal device;
related information of a protocol data unit PDU session related to the terminal device; or
information other than a system information block SIB1 and a master information block MIB in a synchronization reconfiguration reconfigurationWithSync message.

In a possible example, the related information of the PBCH of the first cell includes any one or more of the following:
four least significant bits bits of a system frame number;
an absolute time corresponding to a system frame number of the first cell;
one most significant bit of an offset of a synchronization signal block SSB subcarrier, where the offset of the SSB subcarrier indicates a subcarrier offset of an SSB between a subcarrier 0 of a common resource block CRB and a subcarrier 0 of the SSB;
a quantity of SSBs of the first cell; or
half-frame indication information, where the half-frame indication information indicates whether an SSB is carried in a first half frame or a second half frame.

In a possible example, the third configuration information includes any one or more of the following information:
a random access-common configuration rach-ConfigCommon information element, or a synchronization signal block-burst position ssb-PositionsInBurst information element, where
the rach-ConfigCommon information element includes any one or more of the following information: a random access RACH parameter for random access or beam recovery, a parameter for sending a preamble preamble, or a mapping relationship between a preamble and a synchronization signal block; and
the ssb-PositionsInBurst information element includes time information for sending a synchronization signal block.

According to a sixth aspect, an embodiment of this application provides a communication apparatus, where the communication apparatus is used in a terminal device. The communication apparatus includes a transceiver module and a processing module.

The transceiver module is further configured to receive first indication information sent by a first network device, where the first indication information indicates that a first cell of the first network device supports the terminal device to be handed over from the first cell of the first network device to a second cell of a second network device in a handover without L3 signaling mode, and the second cell is a to-be-handed-over cell of the terminal device.

The transceiver module is further configured to read system information of the second cell sent by the second network device.

In a possible example,
the transceiver module is further configured to receive a second identifier sent by the second network device, where the second identifier identifies the system information of the second cell;
the processing module is further configured to detect whether the second identifier is consistent with a first identifier locally stored by the terminal device, where the first identifier identifies system information of the first cell; and
the processing module is further configured to: if the second identifier is inconsistent with the first identifier, enable the terminal device to read the system information of the second cell sent by the second network device.

In a possible example,
the transceiver module is further configured to receive a second identifier sent by the second network device, where the second identifier identifies the system information of the second cell; and
the processing module is further configured to ignore the second identifier, and read the system information of the second cell sent by the second network device.

In a possible example,
the transceiver module is further configured to receive the system information of the second cell sent by the second network device, where the system information of the second cell includes the second identifier.

A seventh aspect of this application provides a communication apparatus. The apparatus can implement the method in the first aspect or any possible implementation of the first aspect. The apparatus includes a corresponding unit or module configured to perform the method. The unit or module included in the apparatus can be implemented by software and/or hardware. For example, the apparatus may be a first network device, or the apparatus may be a component (for example, a processor, a chip, or a chip system) in the first network device, or the apparatus may be a logical module or software that can implement all or some functions of the first network device. The communication apparatus includes a transceiver module and a processing module. For example, the communication apparatus is a server having the first network device.

An eighth aspect of this application provides a communication apparatus. The apparatus can implement the method in the second aspect or any possible implementation of the second aspect. The apparatus includes a corresponding unit or module configured to perform the method. The unit or module included in the apparatus can be implemented by software and/or hardware. For example, the apparatus may be a second network device, or the apparatus may be a component (for example, a processor, a chip, or a chip system) in the second network device, or the apparatus may be a logical module or software that can implement all or some functions of the second network device. The communication apparatus includes a transceiver module and a processing module.

A ninth aspect of this application provides a communication apparatus. The apparatus can implement the method in the third aspect or any possible implementation of the third aspect. The apparatus includes a corresponding unit or module configured to perform the method. The unit or module included in the apparatus can be implemented by software and/or hardware. For example, the apparatus may be a terminal device network element, or the apparatus may be a component (for example, a processor, a chip, or a chip system) in the terminal device network element, or the apparatus may be a logic module or software that can implement all or some functions of the terminal device network element. The communication apparatus includes a transceiver module and a processing module.

A tenth aspect of embodiments of this application provides a communication apparatus, including at least one processor. The at least one processor is coupled to a memory. The memory is configured to store a program or instructions. The at least one processor is configured to execute the program or the instructions, so that the apparatus implements the method in any possible implementation of the first aspect to the third aspect.

An eleventh aspect of embodiments of this application provides a communication apparatus, including: a communication interface, configured to: input and/or output signaling or data, and a processor, configured to execute a computer-executable program, so that the apparatus implements the method in any possible implementation of the first aspect to the third aspect.

A twelfth aspect of embodiments of this application provides a communication apparatus, including at least one logic circuit and an input/output interface. The input/output interface is configured to input or output information. The logic circuit is configured to perform the method in any possible implementation of the first aspect to the third aspect.

A thirteenth aspect of embodiments of this application provides a computer program product (or referred to as a computer program). When the computer program product is executed by a processor, the processor performs the method in the first aspect to the third aspect and any possible implementation of the first aspect to the third aspect.

A fourteenth aspect of embodiments of this application provides a chip system. The chip system includes at least one processor, configured to support a communication apparatus in implementing the method in the first aspect to the third aspect and any possible implementation of the first aspect to the third aspect.

In a possible design, the chip system may further include a memory. The memory is configured to store program instructions and data that are necessary for the communication apparatus. The chip system may include a chip, or may include a chip and another discrete device. Optionally, the chip system further includes an interface circuit. The interface circuit provides program instructions and/or data for the at least one processor.

A fifteenth aspect of embodiments of this application provides a communication system. The communication system includes the communication apparatus in the fourth aspect, the communication apparatus in the fifth aspect, and/or the communication apparatus in the sixth aspect.

### BRIEF DESCRIPTION OF DRAWINGS

FIG. 1 is a diagram of a communication system according to an embodiment of this application;
FIG. 2 is a diagram of a scenario of a transparent satellite architecture;
FIG. 3 is a diagram of a scenario of a regenerative satellite architecture;
FIG. 4 is a schematic flowchart of handover of a terminal device;
FIG. 5 is a diagram of a quasi-earth-fixed cell scenario;
FIG. 6 is a diagram of an earth moving cell scenario;
FIG. 7 is a schematic flowchart of an embodiment of a non-terrestrial network communication method according to an embodiment of this application;
FIG. 8 is a schematic flowchart of another embodiment of a non-terrestrial network communication method according to an embodiment of this application;
FIG. 9 is a schematic flowchart of another embodiment of a non-terrestrial network communication method according to an embodiment of this application;
FIG. 10 is a diagram of a communication apparatus according to this application;
FIG. 11 is another diagram of a communication apparatus according to this application;
FIG. 12 is another diagram of a communication apparatus according to this application; and
FIG. 13 is another diagram of a communication apparatus according to this application.

### DESCRIPTION OF EMBODIMENTS

First, some terms in embodiments of this application are explained and described, to facilitate understanding of a person skilled in the art.
(1) Terminal device: The terminal device may be a wireless terminal device that can receive scheduling and indication information of a network device. The wireless terminal device may be a device that provides voice and/or data connectivity for a user, or a handheld device having a wireless connection function, or another processing device connected to a wireless modem.
   The terminal device may communicate with one or more core networks or the Internet through a radio access network (radio access network, RAN). The terminal device may be a mobile terminal device like a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the wireless terminal device may be a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal (remote terminal) device, an access terminal (access terminal) device, a user terminal (user terminal) device, a user agent (user agent), a subscriber station (subscriber station, SS), customer premises equipment (customer premises equipment, CPE), a terminal (terminal), user equipment (user equipment, UE), a mobile terminal (mobile terminal, MT), an uncrewed aerial vehicle, or the like. The terminal device may alternatively be a wearable device and a terminal device in a next generation communication system, for example, a terminal device in 5G communication system or a terminal device in a future evolved public land mobile network (public land mobile network, PLMN).
(2) Network device: The network device may be a device in a wireless network. For example, the network device may be a radio access network (radio access network, RAN) node (or device), or may be referred to as a base station, through which the terminal device accesses the wireless network. Currently, some examples of the RAN device are: a next-generation NodeB (generation NodeB, gNodeB) in a 5G communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, a terrestrial station device connected to a satellite, an airplane, or an uncrewed aerial vehicle, and the like.

The network device can send configuration information (for example, carried in a scheduling message and/or an indication message) to the terminal device. A network of the terminal device is further configured based on the configuration information, so that a network configuration of the network device and a network configuration of the terminal device are aligned. Alternatively, through a network configuration preset in the network device and a network configuration preset in the terminal device, the network configuration of the network device and the network configuration of the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form that are used by the network device are not limited in embodiments of this application. For ease of description, this is not limited in embodiments of this application.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is a network device is used for describing the technical solutions provided in embodiments of this application.

(3) Configuration and preconfiguration: In this application, both the configuration and the preconfiguration are used. The configuration means that a network device sends configuration information of some parameters or parameter values to a terminal device by using a message or signaling, so that the terminal device determines a communication parameter or a transmission resource based on the values or the information. Similar to the configuration, the preconfiguration may be parameter information or a parameter value negotiated by the network device and the terminal device in advance, may be parameter information or a parameter value used by the network device or the terminal device as specified in a standard protocol, or may be parameter information or a parameter value pre-stored in the network device or the terminal device. This is not limited in this application.

Further, these values and parameters may be changed or updated.

(4) Terms "system" and "network" in embodiments of this application may be used interchangeably. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active (ACTIVE) state, or may be applied to a terminal device in a non-connected (INACTIVE) state or an idle (IDLE) state.

In this application, unless otherwise specified, for same or similar parts in embodiments, refer to each other. In embodiments of this application and the implementations/methods/implementation methods in the embodiments, unless otherwise specified or unless a logical conflict occurs, terms and/or descriptions are consistent and may be mutually referenced between different embodiments and between the implementations/methods/implementation methods in the embodiments. Technical features in the different embodiments and the implementations/methods/implementation methods in the embodiments may be combined to form a new embodiment, implementation, method, or implementation method based on an internal logical relationship thereof. The following implementations of this application are not intended to limit the protection scope of this application.

For ease of understanding the method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions of this application may be applied to a non-terrestrial network (non-terrestrial network, NTN) system like a satellite communication system or a high altitude platform station (high altitude platform station, HAPS) communication system. The satellite communication system may be integrated with a conventional mobile communication system.

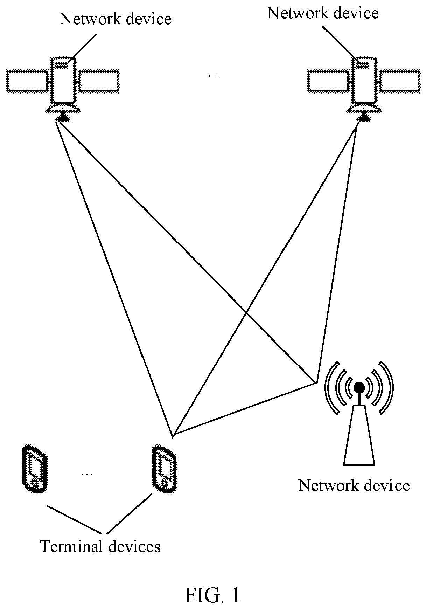

FIG. 1 is a diagram of a communication system according to an embodiment of this application. The communication system includes a network device and a terminal device. In a specific implementation process of this embodiment of this application, the terminal device may be a device like a computer, a smartphone, a telephone, a cable television set-top box, or a digital subscriber line router. The network device may be one of a terrestrial base station, a high altitude platform station, a low earth orbit satellite, a medium earth orbit satellite, and a high earth orbit satellite. It should be noted that, in practice, there may be one or more network devices and one or more terminal devices. For example, the network device shown in FIG. 1 includes two satellites and one terrestrial base station. In addition, quantities of network devices and terminal devices in the communication system shown in FIG. 1 are merely adaptive examples. This is not limited in this application.

The communication system may be configured to support a fourth generation (fourth generation, 4G) access technology, for example, a long term evolution (long term evolution, LTE) access technology. Alternatively, the communication system may support a fifth generation (fifth generation, 5G) access technology, for example, a new radio (new radio, NR) access technology. The communication system is also applicable to a narrowband-internet of things (Narrowband-Internet of Things, NB-IoT) system and a future-oriented communication technology.

The network device may be configured to support access of the terminal device. For example, the network device may be a terrestrial device like an evolved NodeB (evolved NodeB, eNB) in a 4G access technology communication system, a next generation NodeB (next generation NodeB, gNB) in a 5G access technology communication system, a transmission reception point (transmission reception point, TRP), a relay node (relay node), or an access point (access point, AP); or may be a non-terrestrial device: a high altitude platform station, for example, a device like a hot air balloon that can provide a wireless access function for the terminal device, a low earth orbit satellite, a medium earth orbit satellite, or a high earth orbit satellite; or may be a mobile switching center, a device that performs a base station function in device-to-device (Device-to-Device, D2D), vehicle-to-everything (vehicle-to-everything, V2X), or machine-to-machine (machine-to-machine, M2M) communication, or the like.

The terminal device in FIG. 1 may be a device that provides voice or data connectivity for a user, and the terminal device may also be referred to as user equipment (user equipment, UE), a mobile station (mobile station), a subscriber unit (subscriber unit), a station (station), terminal equipment (terminal equipment, TE), or the like. The terminal device may be a cellular phone (phone), a personal digital assistant (personal digital assistant, PDA), a wireless modem (modem), a handheld (handheld) device, a laptop computer (laptop computer), a cordless phone (cordless phone), a wireless local loop (wireless local loop, WLL) station, a tablet computer (pad), or the like. With development of wireless communication technologies, a device that can access a communication system, can communicate with a network side of a communication system, or can communicate with another object by using a communication system may be the terminal device in embodiments of this application, for example, a terminal device and a vehicle in intelligent transportation, a household device in smart home, an electricity meter reading instrument in a smart grid, a voltage monitoring instrument, an environment monitoring instrument, a video surveillance instrument in an intelligent security network, or a cash register. In embodiments of this application, the terminal device may communicate with a base station, for example, each network device in the figure. A plurality of terminal devices may also communicate with each other. The terminal device may be statically fixed or may be mobile.

The following describes the method provided in embodiments of this application. For ease of description, in embodiments of this application, an example in which the network device is a satellite is used for description. It may be understood that a non-terrestrial network communication method provided in embodiments of this application may be further applied to another type of network device, for example, a high altitude platform station like an airplane or a balloon. This is not limited herein.

First, some concepts in embodiments of this application are described.

### 1. Transparent (transparent) satellite architecture, or a transparent forwarding satellite architecture

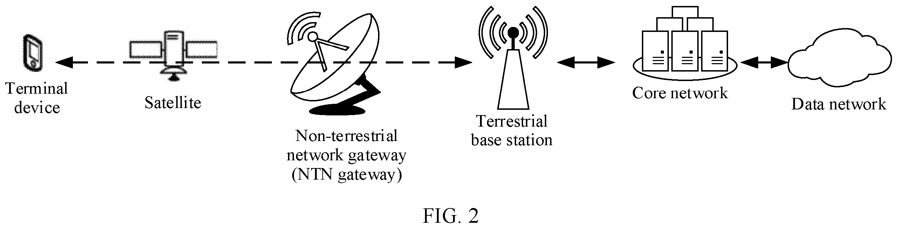

FIG. 2 is a diagram of a scenario of a transparent satellite architecture. A satellite forwards information about a cell of a terrestrial network device (for example, a base station). A function of the satellite is radio frequency filtering, frequency conversion, and amplification. To be specific, the satellite mainly serves as a layer 1 relay (L1 relay) or as a radio frequency amplifier, and does not have another higher protocol layer.

### 2. Regenerative (regenerative) satellite architecture

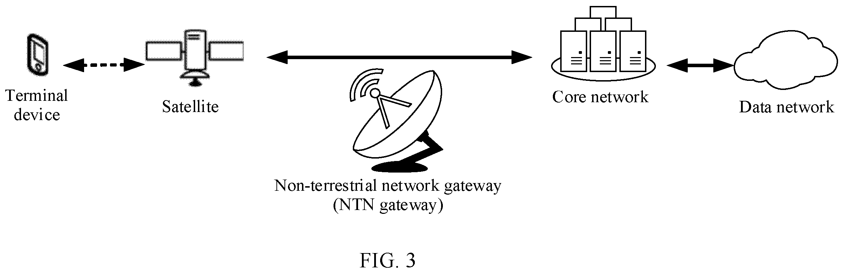

FIG. 3 is a diagram of a scenario of a regenerative satellite architecture. The regenerative satellite architecture may be further divided into two manners. Manner 1: A satellite has a processing function of a base station (for example, has a complete processing function of the base station). In a regenerative working mode, there may be two types of regenerative satellites: a regenerative satellite without an inter-satellite link, that is, there is no inter-satellite link (inter-satellite link, ISL) between satellites; and a regenerative satellite with an inter-satellite link, that is, there is an interface between satellites for directly exchanging data, for example, the inter-satellite link is an Xn interface. Manner 2: A regenerative satellite has a processing function of a distributed unit. In this scenario, the regenerative satellite serves as the distributed unit, and a central unit of the base station may be located in a network device on the ground or in another satellite.

### 3. Handover procedure in which a terminal device is handed over from a first network device to a second network device

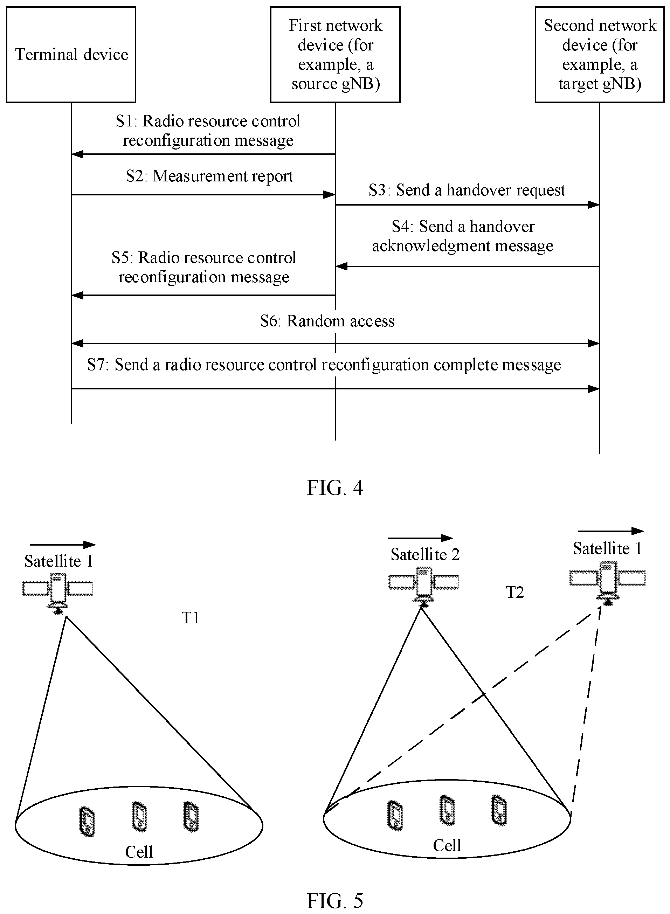

FIG. 4 is a schematic flowchart of handover of a terminal device. Because the terminal device moves, network signal quality of a first cell that currently provides a communication service for the terminal device may deteriorate. Therefore, the terminal device needs to be handed over to a cell (namely, a second cell) with better network signal quality to obtain the communication service. The following describes a handover procedure of the terminal device.

S1: The first network device sends a radio resource control (radio resource controller, RRC) reconfiguration message to the terminal device.

In step S1, the first network device sends the RRC reconfiguration message to the terminal device in a connected state, to indicate the terminal device to perform measurement. Specifically, the RRC reconfiguration message includes parameters such as a measurement object, a report configuration, and a measurement identifier.

S2: The terminal device sends a measurement report to the first network device.

In step S2, the terminal device measures a cell based on the RRC reconfiguration message, generates the measurement report, and reports the measurement report to the first network device.

S3: The first network device sends a handover request to the second network device.

In step S3, after receiving the measurement report reported by the terminal device, the first network device determines (or decides) whether the terminal device needs to be handed over to the second network device. If the determining result is that the terminal device needs to be handed over, the first network device sends the handover request to the second network device.

S4: Send a handover acknowledgment message.

In step S4, the second network device determines whether to allow access of the terminal device. If the determining result is that the access of the terminal device is allowed, the second network device sends the handover acknowledgment message to the first network device. The handover acknowledgment message includes parameters such as a new cell radio network temporary identifier (cell radio network temporary identifier, C-RNTI) and a security-related algorithm of the second network device.

S5: The first network device sends the RRC reconfiguration message to the terminal device.

In step S5, after receiving the handover acknowledgment message sent by the second network device, the first network device sends the RRC reconfiguration message to the terminal device. Content included in the RRC reconfiguration message is from the handover acknowledgment message in step S4. The RRC reconfiguration message serves as a handover command to instruct the terminal device to perform handover. Specifically, the handover command includes: related information of the second cell and a related configuration parameter required by the terminal device to access the second cell, for example, information about the second cell (for example, a physical cell identifier (physical cell identifier, PCI) of the second cell and frequency information corresponding to the second cell), a cell radio network temporary identifier allocated by the second cell to the terminal device, and random access (RACH) resource information (for example, a dedicated RACH resource and/or a common RACH resource) required for accessing the second cell. Generally, the RRC reconfiguration message is generated by the second network device and sent to the first network device. Then, the first network device sends the message to the terminal device.

S6: The terminal device initiates a random access procedure.

In step S6, the terminal device initiates random access to a target base station according to the handover command. In an existing handover procedure, UE disconnects from a source base station, and data receiving and sending of the UE are temporarily interrupted before the UE successfully accesses the target base station.

S7: The terminal device sends an RRC reconfiguration complete message to the second network device.

### 4. Handover without L3 signaling (which may also be referred to as satellite switch with resynchronization)

In a transparent satellite architecture, because a base station remains unchanged before and after satellite switch for a quasi-earth-fixed cell, and the satellite only performs a signal amplification function, a PCI of a cell may not need to be changed before and after satellite switch (where a frequency of the cell is also not changed, for example, a frequency of a synchronization signal and PBCH block (synchronization signal and PBCH block, SSB) corresponding to the cell is not changed), and layer 3 (Layer 3, L3) signaling does not need to be introduced to notify the terminal device to perform handover. The terminal device only needs to perform downlink synchronization and uplink synchronization with a new satellite after the new satellite arrives. For example, the terminal device may complete uplink synchronization with the new satellite through random access, or may complete uplink synchronization with the new satellite in a random access channel less (random access channel less, rach less) manner. In other words, before and after satellite switch, configuration of the terminal device in the cell remains unchanged. Because L3 signaling does not need to be introduced for handover, the foregoing signaling overhead problem is resolved.

Currently, satellite switch includes two switch manners: hard switch (hard switch), to be specific, coverage of old and new satellites does not overlap in time; and soft switch (soft switch), to be specific, coverage of the old and new satellites overlaps in time. In a hard switch scenario, a PCI of the cell may not be changed before and after satellite switch, and therefore, a handover command does not need to be delivered. In a soft switch scenario, because coverage of the old and new satellites overlaps in time, signal interference may exist. Two solutions are proposed. In one solution, a solution the same as that in the hard switch scenario is used, where the network device ensures that signal interference occurs within an overlapping time. In the other solution, a PCI of the cell may be changed before and after satellite switch, but the configuration of the terminal device remains unchanged or is slightly changed (for example, a configuration closely related to the PCI is changed, or only the PCI of the cell needs to be changed). The terminal device searches for a changed PCI of the cell and performs downlink or uplink synchronization. In this way, a handover command does not need to be delivered. For ease of understanding, the foregoing handover in which the PCI is changed or remains unchanged but the handover command does not need to be delivered may be collectively referred to as handover without L3 signaling.

For hard switch, before satellite switch, the old satellite sends indication information #1 to the terminal device, to indicate a moment at which the old satellite (or a cell of the old satellite) stops providing a service for the terminal device (or a moment at which the old satellite stops providing a service for an area, for example, referred to as t-service). The terminal device starts to perform downlink synchronization with a target satellite at the t-service moment. Then, the terminal device monitors, by using the target satellite, a physical downlink control channel (physical downlink control channel, PDCCH) used to schedule uplink or downlink data, or monitors a physical downlink control channel order (PDCCH order) used to instruct the terminal device to initiate random access.

For soft switch, before satellite switch, the old satellite sends indication information #1 and indication information #2 to the terminal device. The indication information #2 indicates a moment at which the new satellite starts to provide a service for the terminal device (or a moment at which the new satellite starts to provide a service for an area, for example, referred to as t-start, where t-start is less than or equal to t-service). The terminal device starts to perform downlink synchronization with the target satellite at the moment t-service or at a moment (which may be specifically determined by the terminal device) in [t-start, t-service]. Then, the terminal device monitors, by using the target satellite, a physical downlink control channel used to schedule uplink or downlink data, or monitors a physical downlink control channel order used to instruct the terminal device to initiate random access.

### 5. Handover procedure of a terminal device in a non-terrestrial network scenario

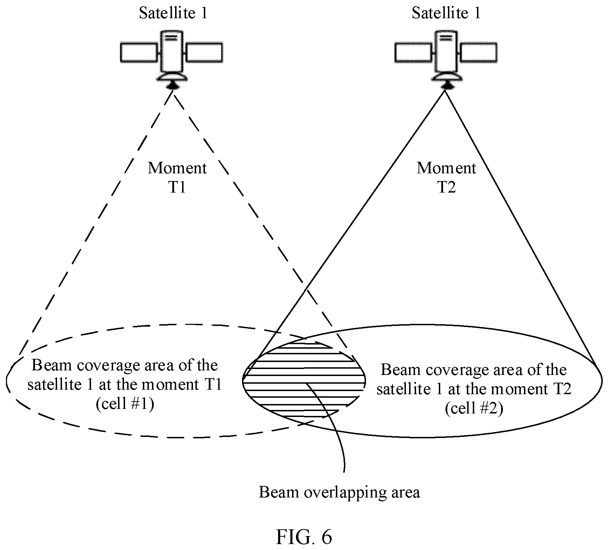

Refer to FIG. 5 and FIG. 6. FIG. 5 is a diagram of a quasi-earth-fixed cell scenario. In the quasi-earth-fixed cell (Quasi-Earth-fixed cell) scenario, a satellite may gaze at the ground for a period of time. When the satellite is to move out of a cell in which the terminal device is located, the terminal device in the cell needs to be handed over to a next satellite, and is provided with a communication service by the next satellite. In other words, in the Quasi-Earth-fixed cell, the satellite can cover only one geographical area in a period of time, and cover another geographical area in another period of time.

FIG. 6 is a diagram of an earth moving cell scenario. In the earth moving cell (earth moving cell) scenario, a cell in which a satellite provides a service moves with the satellite. In a satellite movement process, the terminal device is continuously handed over between satellites.

Because the satellite moves at a high speed relative to the ground, coverage duration of a satellite beam for a specific area on the ground is short. Consequently, the terminal device needs to frequently change a serving cell. However, frequent handover of the terminal device between different satellites causes huge signaling overheads. Therefore, in an NGSO scenario, the huge signaling overheads caused by frequent handover of the terminal device become a key factor affecting communication efficiency of the NTN system.

Based on this, embodiments of this application provide a non-terrestrial network communication method. A first network device sends first configuration information to a second network device. The first configuration information is configuration information related to a first cell, a terminal device is served by the first cell of the first network device, and a second cell corresponding to the second network device is a to-be-handed-over cell of the terminal device. In this way, the second network device configures configuration information of the second cell based on the first configuration information, so that the configuration information of the second network device matches the configuration information of the first network device, to reduce signaling overheads and avoid a signaling storm caused by handover.

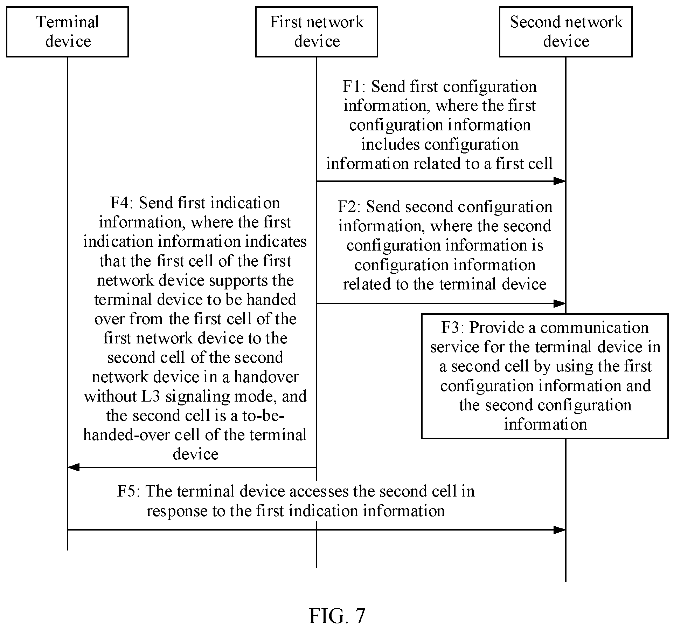

The following describes embodiments of this application with reference to the accompanying drawings. FIG. 7 is a schematic flowchart of an embodiment of a non-terrestrial network communication method according to an embodiment of this application. The non-terrestrial network communication method provided in this embodiment of this application includes the following steps.

F1: A first network device sends first configuration information to a second network device, where the first configuration information includes configuration information related to a first cell.

In step F1, the first network device sends the first configuration information to the second network device, where the first configuration information includes the configuration information related to the first cell.

The first configuration information includes any one or more of the following:
identifier information of the first cell, for example, including but not limited to: a physical cell identifier (physical cell identifier, PCI) of the first cell, or a cell global identifier (cell global identifier, CGI) of the first cell;
access stratum (access stratum, AS) configuration information of the first cell, for example, including antenna information of the first cell, downlink carrier frequency information of the first cell, and the like;
a system information block (system information block, SIB) of the first cell, for example, a SIB1 of the first cell;
a master information block (master information block, MIB) of the first cell; or
related information of a physical broadcast channel (physical broadcast channel, PBCH) of the first cell.

Further, the related information of the PBCH of the first cell includes any one or more of the following:
four least significant bits (bits) of a system frame number (system frame number, SFN) of the first cell, where the four least significant bits of the system frame number are carried in channel coding information of the PBCH (to be specific, when a bit stream of the PBCH is generated at a physical layer, the four least significant bits of the system frame number are used as a bit stream of the PBCH for coding based on an MIB bit stream generated at an RRC layer), for example, four least significant bits of a system frame number corresponding to the MIB;
an absolute time corresponding to a system frame number of the first cell, namely, a correspondence between the system frame number and the absolute time, for example, indicating that a system frame number #1 corresponds to an absolute time #1, where optionally, the system frame number #1 may be a system frame number formed by most significant bit information of the system frame number carried in the MIB of the first cell and the four least significant bits of the system frame number of the first cell;
one most significant bit of an offset of a synchronization signal block (synchronization signal block, SSB) subcarrier, where the one most significant bit of the offset of the SSB subcarrier is carried in channel coding information of the PBCH, and the offset of the SSB subcarrier indicates a subcarrier offset of an SSB between a subcarrier 0 of a common resource block (common resource block, CRB) and a subcarrier 0 of the SSB;
a quantity of SSBs of the first cell; or
half-frame indication information, where the half-frame indication information indicates whether an SSB is carried in a first half frame or a second half frame.

It should be noted that the first configuration information may further include other configuration information related to the first cell. This is not limited in this embodiment of this application.

In a possible implementation, when or after a common interface (for example, an Xn interface) between the first network device and the second network device is set up, the first network device sends the first configuration information to the second network device, where the common interface is an interface between network devices. For example, the first configuration information is carried in an Xn interface setup request sent by the first network device to the second network device, where the Xn interface setup request is used to request to set up the Xn interface between the first network device and the second network device. For another example, the second network device sends an Xn interface setup request to the first network device, and the first configuration information is carried in an Xn interface setup request response that is fed back by the first network device to the second network device. For example, the Xn interface setup request may be an "XN SETUP REQUEST" message, and the Xn interface setup request response may be an "XN SETUP RESPONSE" message.

In another possible implementation, when the first network device sends a handover request message to the second network device, the first configuration information is carried in the handover request message. For related descriptions of the handover request message, refer to step S3. The handover request message indicates that there is a terminal device that needs to be handed over from the first network device to the second network device. For example, the handover request message may be a "HANDOVER REQUEST" message.

Optionally, the first network device may send second indication information to the second network device, where the second indication information indicates the second network device to use a handover without L3 signaling mode.

Optionally, the first network device may alternatively implicitly instruct the second network device to use the handover without L3 signaling mode. For example, when sending the first configuration information to the second network device, the first network device implicitly instructs, by using the first configuration information, the second network device to use the handover without L3 signaling mode.

F2: The first network device sends second configuration information to the second network device, where the second configuration information is configuration information related to the terminal device.

In step F2, the first network device sends the second configuration information to the second network device, where the second configuration information is the configuration information related to the terminal device.

The second configuration information includes any one or more of the following:
a key KgNB, where the key KgNB is used to determine a key of an access stratum;
a cell radio network temporary identifier (cell radio network temporary identifier, C-RNTI) allocated by the first cell to the terminal device, where the second network device configures the second cell based on the C-RNTI, so that the second cell does not need to reconfigure the C-RNTI for the terminal device;
a mapping relationship between a quality of service (quality of service, QoS) flow and a data radio bearer (data radio bearer, DRB) that are related to the terminal device;
radio resource management (radio resource management, RRM) measurement configuration information, and capability information of the terminal device, where the capability information of the terminal device corresponds to capabilities of a plurality of radio access technologies (radio access technologies, RATs);
related information of a protocol data unit (protocol data unit, PDU) session related to the terminal device; or
information other than a system information block SIB1 and a master information block MIB in a synchronization reconfiguration reconfigurationWithSync message.

In a possible implementation, the second configuration information and the first configuration information may also be carried in a same message and sent to the second network device. For example, the handover request message sent by the second network device to the first network device includes the first configuration information and the second configuration information. For another example, the Xn interface setup request sent by the second network device to the first network device includes the first configuration information and the second configuration information. For another example, the Xn interface setup request response sent by the second network device to the first network device includes the first configuration information and the second configuration information.

In another possible implementation, the second configuration information and the first configuration information are mutually independently sent to the second network device. For example, the first cell of the first network device manages a plurality of terminal devices. If the first network device has sent the first configuration information to the second network device (for example, the first network device sends the Xn interface setup request message including the first configuration information to the second network device), the first network device only needs to send the second configuration information related to the terminal device to the second network device (for example, the first network device sends the handover request message including the second configuration information to the second network device), to reduce signaling overheads.

An execution sequence of step F2 and step F1 is not limited in this embodiment of this application.

Cell identifiers of the first cell and the second cell may be the same or different. Even the first cell and the second cell are a same cell.

F3: The second network device provides a communication service for the terminal device in the second cell by using the first configuration information and the second configuration information.

In step F3, after the second network device receives the first configuration information and the second configuration information (optionally, further after t-start or after t-service), the second network device updates the related configuration of the second cell based on the first configuration information and the second configuration information. Then, the second network device provides a communication service for the terminal device in the second cell by using the first configuration information and the second configuration information. For example, the second network device generates system information of the second cell by using the first configuration information, and further generates, for the terminal device by using the second configuration information, dedicated configuration information corresponding to the terminal device.

In a possible implementation, after the second network device receives the identifier information of the first cell, the second network device may configure the second cell based on the identifier information of the first cell, so that the identifier information of the second cell is consistent with the identifier information of the first cell.

In a possible implementation, after the second network device receives the RRM measurement configuration information, the second network device configures measurement of the terminal device based on the RRM measurement configuration information, so that measurement configuration information of the terminal device and measurement configuration information of the second network device are aligned.

In a possible implementation, after the second network device receives the configuration information of the access stratum (access stratum, AS) of the first cell, the second network device configures the second cell based on the configuration information of the access stratum of the first cell, so that configuration information of an access stratum of the second cell is the same as the configuration information of the access stratum of the first cell. For example, antenna information of the second cell is the same as antenna information of the first cell, and downlink carrier frequency information of the second cell is the same as downlink carrier frequency information of the first cell.

In a possible implementation, the second network device configures the second cell based on the system information block of the first cell, where a system information block of the second cell is the same as the system information block of the first cell.

In a possible implementation, the second network device configures the second cell based on the master information block of the first cell, where a master information block of the second cell is the same as the master information block of the first cell.

In a possible implementation, the second network device configures the second cell based on the related information of the physical broadcast channel PBCH of the first cell. For example, the second network device may obtain a downlink frame number of the first cell based on the four least significant bits of the system frame number of the first cell and then based on the most significant bit information of the system frame number (for example, six most significant bits of the system frame number) carried in the MIB of the first cell. In this way, the second network device may determine a downlink frame number of the second cell based on the downlink frame number of the first cell, so that when accessing the second cell from the first cell, the terminal device can learn the downlink frame number corresponding to the second cell without reading an MIB sent by the second cell, and even may not need to perform downlink synchronization. For another example, the second network device may set downlink timing (that is, set the system frame number) of the second cell based on the absolute time corresponding to the system frame number of the first cell.

Optionally, after the second network device receives the first configuration information and/or the second configuration information, the second network device may immediately apply the first configuration information and/or the second configuration information after receiving the first configuration information and/or the second configuration information. The second network device may apply the first configuration information and/or the second configuration information at a time indicated by first time information. For example, the second network device applies configuration information of the first cell for the terminal device in the second cell when a satellite is about to change.

F4: The first network device sends first indication information to the terminal device, where the first indication information indicates that the first cell of the first network device supports the terminal device to be handed over from the first cell of the first network device to the second cell of the second network device in the handover without L3 signaling mode, and the second cell is a to-be-handed-over cell of the terminal device.

The first indication information may also indicate that the first cell of the first network device supports satellite change but does not need to change a cell identifier, or indicate that the first cell of the first network device supports satellite change and change of a cell identifier, but the terminal device does not need to change another radio resource configuration.

In step F4, the first network device sends the first indication information to the terminal device, where the first indication information indicates the terminal device to hand over from the first cell to the second cell in the handover without L3 signaling mode, and the second cell is a cell of the second network device.

The first indication information may include ephemeris information corresponding to the second network device. The first indication information may also include related information of the first cell, for example, the identifier information of the first cell. The first indication information may further include the first time information. The first time information indicates any one of the following times: a time (namely, t-service) at which the first cell stops providing a service, where the first cell is a cell for which the first network device provides a communication service, and the first cell provides a communication service for the terminal device; an application time at which a target base station applies a handover mode of a handover without L3 signaling procedure; or a time (namely, t-start) at which the second cell starts to provide a service. Optionally, the first network device sends the first indication information to the terminal device by using a broadcast message. The terminal device performs handover without L3 signaling based on the first indication information only when the terminal device supports the handover without L3 signaling mode.

For example, the first time information may be time information that is provided by an NTN quasi-earth fixed system and that indicates that the first cell stops serving a currently covered area, namely, a time at which the first network device stops serving the first cell, namely, "t-service". In another example, the first time information may alternatively be an application time of the handover without L3 signaling mode of the second network device. In another example, the first time information may alternatively be a time at which the second cell performs downlink synchronization with the first cell. In another example, the first time information may alternatively be a time at which the second cell of the second network device provides coverage, namely, "t-start".

It should be noted that the first network device may further send the first indication information to the second network device.

An execution sequence of step F4 and step F1 to step F3 is not limited in this embodiment of this application.

F5: The terminal device accesses the second cell in response to the first indication information.

In step F5, after the terminal device receives the first indication information, for hard switch, the terminal device starts to perform downlink synchronization with the second cell of the second network device after the moment t-service; and for soft switch, the terminal device starts to perform downlink synchronization with the second cell of the second network device at a moment between t-start and t-service or after t-service.

The terminal device initiates random access to the second cell, or the terminal device listens to a downlink physical channel that is sent by the second cell and that is used to trigger the terminal device to initiate random access, or listens to a downlink physical channel that is sent by the second cell and that is used to schedule uplink or downlink data of the terminal device (in this manner, the terminal device does not need to initiate random access to the second cell).

In this embodiment of this application, the second network device uses the first configuration information and the second configuration information that are from the first network device, so that cell-level configuration information and terminal device-level configuration information are consistent between the first network device and the second network device. In a regenerative satellite working scenario, handover without L3 signaling is implemented, to reduce signaling overheads, avoid a signaling storm caused by handover, and improve communication efficiency.

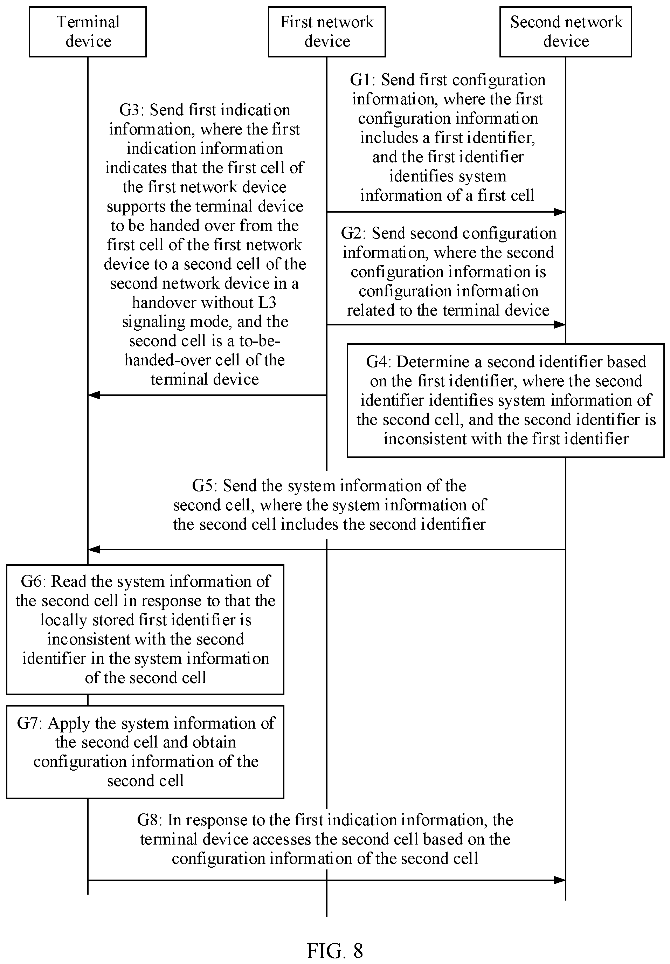

With reference to the foregoing embodiments, refer to FIG. 8. FIG. 8 is a schematic flowchart of another embodiment of a non-terrestrial network communication method according to an embodiment of this application. The non-terrestrial network communication method provided in this embodiment of this application further includes the following steps.

G1: A first network device sends first configuration information to a second network device, where the first configuration information includes a first identifier, and the first identifier identifies system information of a first cell.

In step G1, the first network device sends the first configuration information to the second network device, where the first configuration information includes the first identifier, and the first identifier identifies the system information of the first cell. The first network device may send a plurality of first identifiers to the second network device, and each first identifier identifies one piece of system information of the first cell.

For example, the first identifier is a value tag value tag, and the system information of the first network device includes a system information block SIB.

In a possible implementation, the first identifier is carried in a SIB1 sent by the first network device to the second network device.

In step G1, a manner in which the first network device sends the first configuration information to the second network device is similar to that in step F1. Details are not described herein.

G2: The first network device sends second configuration information to the second network device, where the second configuration information is configuration information related to a terminal device.

Step G2 is similar to step F2. Details are not described herein.

G3: The first network device sends first indication information to the terminal device, where the first indication information indicates that the first cell of the first network device supports the terminal device to be handed over from the first cell of the first network device to a second cell of the second network device in the handover without L3 signaling mode, and the second cell is a to-be-handed-over cell of the terminal device.

For the first indication information, refer to step F4. Details are not described herein.

Optionally, the first network device may further send third configuration information to the second network device, where the third configuration information is configuration information related to random access RACH in a system information block SIB1 of the second cell. For example, the third configuration information includes any one or more of the following information: a random access-common configuration rach-ConfigCommon information element, or a synchronization signal block-burst position ssb-PositionsInBurst information element, where the rach-ConfigCommon information element includes any one or more of the following information: a random access RACH parameter for random access or beam recovery, a parameter for sending a preamble preamble, or a mapping relationship between a preamble and a synchronization signal block; and the ssb-PositionsInBurst information element includes time information for sending a synchronization signal block.

In this way, after the second network device obtains the third configuration information, the second network device applies the third configuration information, that is, applies the RACH-related configuration. The second network device may apply the third configuration information before UE initiates access, for example, apply the third configuration information at a time indicated by first time information. The terminal device accesses the second cell based on the original RACH-related configuration.

G4: The second network device determines a second identifier based on the first identifier, where the second identifier identifies system information of the second cell, and the second identifier is inconsistent with the first identifier.

Step G4 is performed after step G1. In step G4, after receiving the first identifier, the second network device determines the second identifier based on the first identifier. The second identifier identifies the system information of the second cell, and the second identifier is inconsistent with the first identifier.

Optionally, the second network device performs step G4 after t-service, or after a time between t-start and t-service.

An example in which the first identifier is a value tag is used for description. The value tag is carried in the SIB1, and indicates whether system information corresponding to the value tag is changed. When a value tag corresponding to a SIBx (where the SIBx is any SIB) read by the terminal device from the SIB1 is different from a locally stored value tag of the terminal device, the SIBx corresponding to the value tag changes. In this case, UE needs to read an updated SIBx.

For example, after receiving a value tag #1 of the first network device, the second network device detects a locally stored value tag #2 of the SIB. If the value tag #1 is different from the value tag #2, it is determined that the value tag #2 serves as the second identifier. If the value tag #1 is the same as the value tag #2, it is determined that a value tag #3 serves as the second identifier, and the value tag #3 is different from the value tag #1. It is ensured that the UE learns that a value tag provided by a network side is different from a local value tag.

For example, after the second network device receives a value tag #1 of a SIBx corresponding to the first cell of the first network device, the second network device sets a value tag #2 for a SIBx of the second cell, where the value tag #1 is different from the value tag #2. It is ensured that the terminal device learns that content of the SIBx corresponding to the second cell of the second network device needs to be re-obtained, and the terminal device reads a SIBx corresponding to the second cell of the second network device.

G5: The second network device sends the system information of the second cell to the terminal device, where the system information of the second cell includes the second identifier.

Step G5 is performed after step G4. After the second network device determines the second identifier, the second network device sends the system information of the second cell to the terminal device, where the system information of the second message includes the second identifier. For example, the second network device sends the SIB1 including the second identifier corresponding to the SIBx to the terminal device.

For example, the second network device sends the system information of the second cell to the terminal device in a broadcast manner.

Optionally, the second network device may further send third indication information to the terminal device, where the third indication information is used to notify the terminal device that system information of a cell changes. For example, the third indication information is carried in a short message (short message). The second network device sets a bit corresponding to the short message to indicate to the terminal device that the system information of the cell changes. The terminal device learns, by receiving the short message, that the SIB1 needs to be read. After reading the SIB1, the terminal device compares the second identifier corresponding to the SIBx carried in the SIB1. If the second identifier is different from the first identifier that corresponds to the SIBx and that is stored in the terminal device, the terminal device reads the SIBx.

G6: The terminal device reads the system information of the second cell in response to that the locally stored first identifier is inconsistent with the second identifier in the system information of the second cell.

In step G6, after receiving the SIB1 of the second cell, the terminal device reads the second identifier. When the terminal device finds that the second identifier is inconsistent with the locally stored first identifier, the terminal device further reads the system information (SIBx) of the second cell corresponding to the second identifier. For example, the terminal device reads the SIB1 of the second cell, where the SIB1 of the second cell includes the second identifier. When determining that the second identifier is inconsistent with the first identifier, the terminal device further reads the system information (SIBx) of the second cell corresponding to the second identifier.

Optionally, after the terminal device receives the third indication information, the terminal device reads the SIB1 of the second cell based on the third indication information, and then obtains the second identifier from the SIB1 of the second cell.

G7: The terminal device applies the system information of the second cell and obtains configuration information of the second cell.

In step G7, after the terminal device reads the system information (SIBx) of the second cell, the terminal device applies the system information (SIBx) of the second cell, and then obtains the configuration information of the second cell from the system information of the second cell.

Optionally, the terminal device may apply the system information of the second cell at the time indicated by the first time information.

G8: The terminal device accesses the second cell in response to the first indication information.

In step G8, after the terminal device receives the first indication information, the terminal device may access the second cell based on the configuration information of the second cell.

Step G8 is similar to step F5. Details are not described herein. A sequence relationship between step G8 and step G6 is not limited in this embodiment. Generally, G8 is performed before G6 and G7.

In another implementation, the terminal device accesses the second cell at the time indicated by the first time information.

In this embodiment of this application, the second network device sends the second identifier, so that the terminal device learns that the system information of the second cell needs to be read and applied. In a process in which the terminal device is handed over from the first cell to the second cell, the terminal device only needs to re-read the system information of the second cell, and a configuration of the terminal device can match a configuration of the second cell without updating terminal device-level configuration information. In a regenerative satellite working scenario, handover without L3 signaling is implemented, to reduce signaling overheads, avoid a signaling storm caused by handover, and improve communication efficiency.

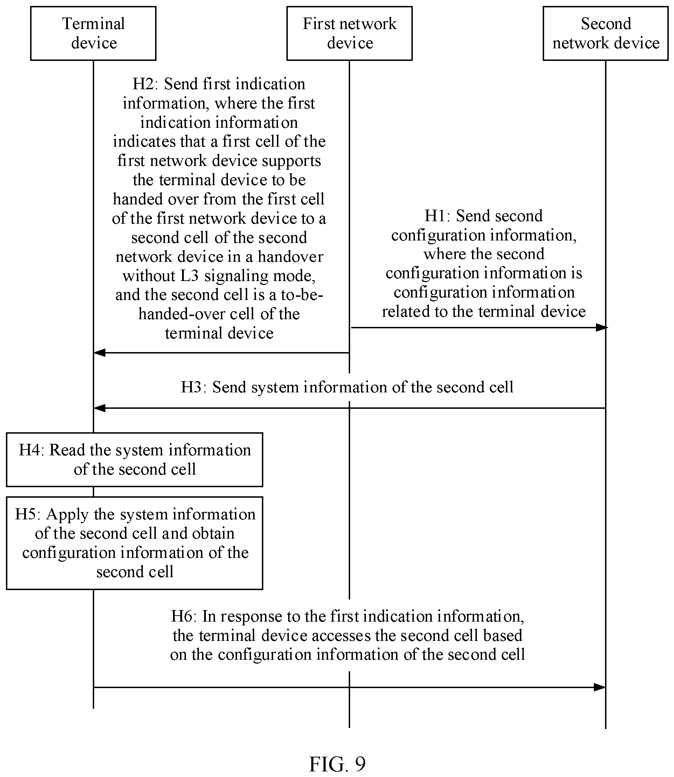

With reference to the foregoing embodiments, refer to FIG. 9. FIG. 9 is a schematic flowchart of another embodiment of a non-terrestrial network communication method according to an embodiment of this application. The non-terrestrial network communication method provided in this embodiment of this application further includes the following steps.

H1: A first network device sends second configuration information to a second network device, where the second configuration information is configuration information related to a terminal device.

Step H1 is similar to step F2. Details are not described herein.

H2: The first network device sends first indication information to the terminal device, where the first indication information indicates that a first cell of the first network device supports the terminal device to be handed over from the first cell of the first network device to a second cell of the second network device in a handover without L3 signaling mode, and the second cell is a to-be-handed-over cell of the terminal device.

Step H2 is similar to step G3. Details are not described herein.

It should be noted that an execution sequence of step H2 and step H1 is not limited in this embodiment of this application.

H3: The second network device sends system information of the second cell to the terminal device.

In step H3, the second network device sends the system information of the second cell to the terminal device. The system information of the second cell includes a SIB1 of the second cell and a SIBx of the second cell (namely, any one or more SIBs of the second cell).

H4: The terminal device reads the system information of the second cell.

In step H4, the terminal device does not need to determine, based on a value tag of the SIB1, whether a SIB corresponding to the value tag needs to be updated. After the terminal device receives the system information (SIBx) of the second cell, the terminal device reads and applies the system information of the second cell.

In an example, the terminal device receives the SIB1 of the second cell sent by the second network device, where the SIB1 includes a second identifier, and the second identifier identifies the system information of the second cell, for example, the SIBx of the second cell. Then, the terminal device ignores the second identifier, and the terminal device continues to read the SIBx of the second cell sent by the second network device. In other words, regardless of a value of the second identifier, the terminal device reads the SIBx of the second cell sent by the second network device.

H5: The terminal device applies the system information of the second cell and obtains configuration information of the second cell.

In step H5, the terminal device may apply the system information of the second cell at a time indicated by first time information, or the terminal device may apply the system information of the second cell after reading the system information of the second cell.

For example, for hard switch, the terminal device starts to perform downlink synchronization with the second cell of the second network device after the moment t-service; and for soft switch, the terminal device starts to perform downlink synchronization with the second cell of the second network device at a moment between t-start and t-service or after t-service.

Further, after the terminal device applies the system information of the second cell, the terminal device obtains the configuration information of the second cell from the system information of the second cell.

H6: In response to the first indication information, the terminal device accesses the second cell based on the configuration information of the second cell.

In step H6, after the terminal device receives the first indication information, the terminal device may access the second cell based on the configuration information of the second cell.

Step H6 is similar to step H5. Details are not described herein.

A sequence relationship between step H6 and step H4 is not limited in this embodiment. Generally, H6 is performed before H4 and H5.

In another implementation, the terminal device accesses the second cell at the time indicated by the first time information.

In this embodiment of this application, after the second network device sends the system information of the second cell to the terminal device, the terminal device directly reads and applies the system information of the second cell without detecting a value tag corresponding to the system information. It is ensured that a configuration of the terminal device matches a configuration of the second cell. In a regenerative satellite working scenario, handover without L3 signaling is implemented, to reduce signaling overheads, avoid a signaling storm caused by handover, and improve communication efficiency.

The foregoing describes this application from a perspective of the method, and the following further describes other embodiments provided in this application.

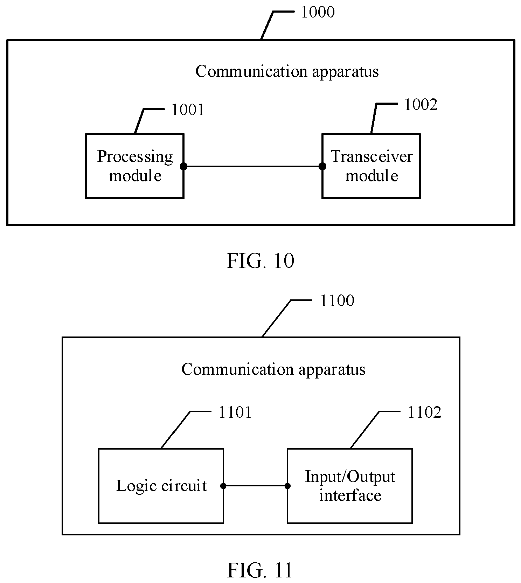

FIG. 10 is a diagram of an implementation of a communication apparatus according to this application. The communication apparatus 1000 includes a processing module 1001 and a transceiver module 1002. The communication apparatus 1000 may implement functions of the communication apparatus (including the first network device, the second network device, and/or the terminal device) in the foregoing method embodiments, and therefore can also implement beneficial effects of the foregoing method embodiments. In this embodiment of this application, the communication apparatus 1000 may be the first network device, the second network device, and/or the terminal device, or may be an integrated circuit or an element, for example, a chip, in the first network device, the second network device, and/or the terminal device, or may be integrated with an integrated circuit or an element in the first network device, the second network device, and/or the terminal device.

FIG. 11 is another diagram of a structure of a communication apparatus 1100 according to this application. The communication apparatus 1100 includes at least an input/output interface 1102. The communication apparatus 1100 may be a chip or an integrated circuit.

Optionally, the communication apparatus further includes a logic circuit 1101.

The transceiver module 1002 shown in FIG. 10 may be a communication interface. The communication interface may be the input/output interface 1102 in FIG. 11. The input/output interface 1102 may include an input interface and an output interface. Alternatively, the communication interface may be a transceiver circuit, and the transceiver circuit may include an input interface circuit and an output interface circuit.

Optionally, when the communication apparatus 1100 is the first network device, the second network device, and/or the terminal device in the foregoing embodiments, the input/output interface 1102 is configured to: input and output information, and the logic circuit 1101 is configured to perform the methods performed by the first network device, the second network device, and/or the terminal device in the foregoing embodiments.

The logic circuit 1101 and the input/output interface 1102 may further perform other steps performed by the communication apparatus in any one of embodiments, and achieve corresponding beneficial effects. Details are not described herein again.

In a possible implementation, the processing module 1001 shown in FIG. 10 may be the logic circuit 1101 in FIG. 11.

Optionally, the logic circuit 1101 may be a processing apparatus, and some or all functions of the processing apparatus may be implemented by using software. Some or all functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip, or any combination of the foregoing chips or processors.

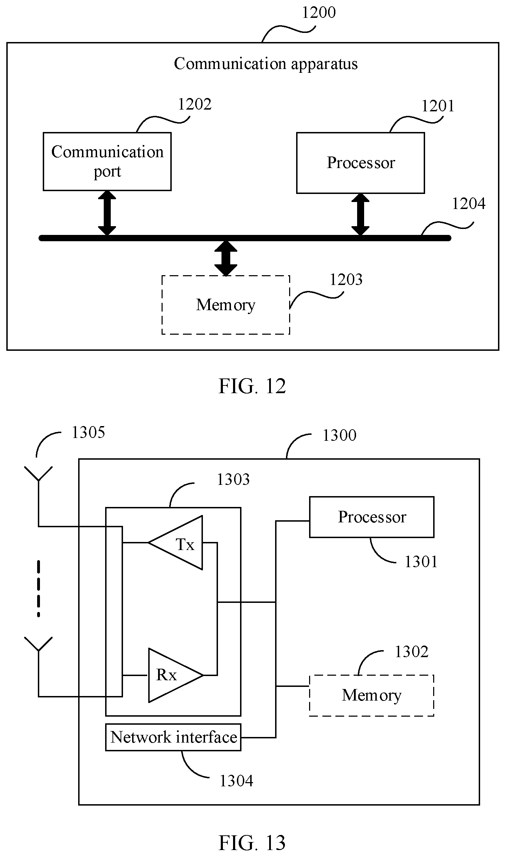

FIG. 12 shows a communication apparatus 1200 in the foregoing embodiments according to an embodiment of this application. The communication apparatus 1200 may be specifically the communication apparatus used as the first network device, the second network device, and/or the terminal device in the foregoing embodiments.

In a possible diagram of a logical structure of the communication apparatus 1200, the communication apparatus 1200 may include but is not limited to at least one processor 1201 and a communication port 1202.

Further, optionally, the apparatus may include at least one of a memory 1203 and a bus 1204. In this embodiment of this application, the at least one processor 1201 is configured to perform control processing on an action of the communication apparatus 1200.

In addition, the processor 1201 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1200 shown in FIG. 12 may be specifically configured to implement the steps implemented by the first network device, the second network device, and/or the terminal device in the foregoing method embodiments, and implement technical effects corresponding to the first network device, the second network device, and/or the terminal device. For a specific implementation of the communication apparatus shown in FIG. 12, refer to the descriptions in the foregoing method embodiments. Details are not described herein again.

FIG. 13 is a diagram of a structure of a communication apparatus 1300 in the foregoing embodiments according to an embodiment of this application. The communication apparatus 1300 may be specifically the communication apparatus used as the first network device, the second network device, and/or the terminal device in the foregoing embodiments. For the structure of the communication apparatus, refer to the structure shown in FIG. 13.

The communication apparatus 1300 includes at least one processor 1301 and at least one network interface 1304. Further, optionally, the communication apparatus further includes at least one memory 1302, at least one transceiver 1303, and one or more antennas 1305. The processor 1301, the memory 1302, and the transceiver 1303 are connected to the network interface 1304, for example, through a bus. In this embodiment of this application, the connection may include various interfaces, transmission lines, buses, or the like. This is not limited in this embodiment. The antenna 1305 is connected to the transceiver 1303. The network interface 1304 is configured to enable the communication apparatus to communicate with another communication device through a communication link. For example, the network interface 1304 may include a network interface, for example, an S1 interface, between the communication apparatus and a core network device. The network interface may include a network interface, for example, an X2 or Xn interface, between the communication apparatus and another communication apparatus (for example, another radio access network or core network device).

The processor 1301 is mainly configured to: process a communication protocol and communication data, control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. The processor 1301 in FIG. 13 may integrate functions of the baseband processor and the central processing unit. A person skilled in the art may understand that the baseband processor and the central processing unit may alternatively be independent processors, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1302 may exist independently, and is connected to the processor 1301. Optionally, the memory 1302 may be integrated with the processor 1301, for example, integrated into a chip. The memory 1302 can store program code for executing the technical solutions in embodiments of this application, and the processor 1301 controls the execution. Various types of executed computer program code may also be considered as drivers of the processor 1301.

FIG. 13 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1303 may be configured to support receiving or sending of a radio frequency signal between the communication apparatus and a terminal, and the transceiver 1303 may be connected to the antenna 1305. The transceiver 1303 includes a transmitter Tx and a receiver Rx. Specifically, the one or more antennas 1305 may receive the radio frequency signal. The receiver Rx of the transceiver 1303 is configured to: receive the radio frequency signal from the antenna, convert the radio frequency signal into a digital baseband signal or a digital intermediate frequency signal, and provide the digital baseband signal or the digital intermediate frequency signal to the processor 1301, so that the processor 1301 performs further processing, for example, demodulation processing and decoding processing, on the digital baseband signal or the digital intermediate frequency signal. In addition, the transmitter Tx of the transceiver 1303 is further configured to: receive a modulated digital baseband signal or digital intermediate frequency signal from the processor 1301, convert the modulated digital baseband signal or digital intermediate frequency signal into a radio frequency signal, and send the radio frequency signal through the one or more antennas 1305. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 1303 may also be referred to as a transceiver module, a transceiver machine, a transceiver apparatus, or the like. Optionally, a device configured to implement a receiving function in the transceiver module may be considered as a receiving unit. A device configured to implement a sending function in the transceiver module may be considered as a sending unit. In other words, the transceiver module includes the receiving unit and the sending unit. The receiving unit may also be referred to as a receiving machine, an input port, a receiving circuit, or the like. The sending unit may be referred to as a transmitting machine, a transmitter, a transmitting circuit, or the like.

It should be noted that the communication apparatus 1300 shown in FIG. 13 may be specifically configured to implement the steps implemented by the first network device, the second network device, and/or the terminal device in the foregoing method embodiments, and implement technical effects corresponding to the first network device, the second network device, and/or the terminal device. For a specific implementation of the communication apparatus 1300 shown in FIG. 13, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the first network device, the second network device, and/or the terminal device in the foregoing embodiments.

An embodiment of this application further provides a computer program product (or referred to as a computer program) storing one or more computers. When the computer program product is executed by a processor, the processor performs the method in the possible implementations of the first network device, the second network device, and/or the terminal device.

An embodiment of this application further provides a chip system. The chip system includes at least one processor, configured to support a communication apparatus in implementing the functions in the foregoing possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the first network device, the second network device, and/or the terminal device in the foregoing method embodiments.

An embodiment of this application further provides a communication system. The communication system includes the first network device, the second network device, and/or the terminal device in any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or a part making contributions, or all or some of the technical solutions may be implemented in a form of software product. A computer software product is stored in a storage medium and includes several instructions for instructing a computer device (which may be a personal computer, a server, a radio access network, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A non-terrestrial network communication method, wherein the method is applied to a first network device, and the method comprises:
obtaining, by the first network device, first configuration information of a first cell, wherein the first cell is a cell of the first network device; and
sending, by the first network device, the first configuration information to a second network device, wherein the first configuration information comprises a first identifier and/or related information of a physical broadcast channel PBCH of the first cell, and the first identifier identifies system information of the first cell.

2. The method according to claim 1, wherein the related information of the PBCH of the first cell comprises any one or more of the following:
four least significant bits bits of a system frame number;
an absolute time corresponding to a system frame number of the first cell;
one most significant bit of an offset of a synchronization signal block SSB subcarrier, wherein the offset of the SSB subcarrier indicates a subcarrier offset of an SSB between a subcarrier 0 of a common resource block CRB and a subcarrier 0 of the SSB;
a quantity of SSBs of the first cell; or
half-frame indication information, wherein the half-frame indication information indicates whether an SSB is carried in a first half frame or a second half frame.

3. The method according to claim 1 or 2, wherein the first identifier is a value tag value tag, and system information of the first network device comprises a system information block SIB.

4. The method according to any one of claims 1 to 3, wherein the method further comprises:
sending, by the first network device, second configuration information to the second network device, wherein the second configuration information comprises configuration information related to a terminal device, the terminal device is served by the first network device, and a second cell corresponding to the second network device is a to-be-handed-over cell of the terminal device.

5. The method according to claim 4, wherein the method further comprises:
sending, by the first network device, third configuration information to the second network device, wherein the third configuration information is configuration information related to random access in a system information block SIB1 of the second cell.

6. The method according to claim 4 or 5, wherein the second configuration information comprises any one or more of the following:
a key KgNB, wherein the key KgNB is used to determine a key of an access stratum;
a cell radio network temporary identifier C-RNTI;
a mapping relationship between a quality of service QoS flow and a data radio bearer DRB that are related to the terminal device;
capability information of the terminal device;
radio resource management RRM measurement configuration information;
related information of a protocol data unit PDU session related to the terminal device; or
information other than a system information block SIB1 and a master information block MIB in a synchronization reconfiguration reconfigurationWithSync message.

7. The method according to any one of claims 1 to 6, wherein the first configuration information comprises any one or more of the following:
identifier information of the first cell;
access stratum configuration information of the first cell;
a system information block SIB1 of the first cell; or
a master information block MIB of the first cell.

8. The method according to any one of claims 5 to 7, wherein the third configuration information comprises any one or more of the following information:
a random access-common configuration rach-ConfigCommon information element, or a synchronization signal block-burst position ssb-PositionsInBurst information element, wherein
the rach-ConfigCommon information element comprises any one or more of the following information: a random access RACH parameter for random access or beam recovery, a parameter for sending a preamble preamble, or a mapping relationship between a preamble and a synchronization signal block; and
the ssb-PositionsInBurst information element comprises time information for sending a synchronization signal block.

9. A non-terrestrial network communication method, wherein the method is applied to a second network device, and the method comprises:
receiving, by the second network device, first configuration information sent by a first network device, wherein the first configuration information comprises a first identifier and/or related information of a physical broadcast channel PBCH of a first cell, the first identifier identifies system information of the first cell, and the first cell is a cell of the first network device; and
providing, by the second network device, a communication service for a terminal device in a second cell by using the first configuration information, wherein the terminal device is served by the first network device, and the second cell is a to-be-handed-over cell of the terminal device.

10. The method according to claim 9, wherein providing, by the second network device, the communication service for the terminal device in the second cell by using the first configuration information comprises:
generating, by the second network device, system information of the second cell based on the first configuration information; and
sending, by the second network device, the system information of the second cell to the terminal device.

11. The method according to claim 9 or 10, wherein the method further comprises:
receiving, by the second network device, the first identifier sent by the first network device, wherein the first identifier identifies system information of the first network device;
determining, by the second network device, a second identifier based on the first identifier, wherein the second identifier identifies system information of the second network device, and the second identifier is inconsistent with the first identifier; and
sending, by the second network device, the second identifier to the terminal device.

12. The method according to claim 11, wherein sending, by the second network device, the second identifier to the terminal device comprises:
sending, by the second network device, the system information of the second cell to the terminal device, wherein the system information of the second cell comprises the second identifier.

13. The method according to claim 11 or 12, wherein the first identifier is a value tag value tag, and the system information of the first cell comprises a system information block SIB; and
the second identifier is a value tag value tag, and the system information of the second cell comprises a system information block SIB.

14. The method according to any one of claims 9 to 13, wherein the method further comprises:
receiving, by the second network device, second configuration information sent by the first network device, wherein the second configuration information comprises configuration information related to the terminal device; and
providing, by the second network device, a communication service for the terminal device in the second cell by using the second configuration information.

15. The method according to any one of claims 9 to 14, wherein the method further comprises:
receiving, by the second network device, third configuration information sent by the first network device, wherein the third configuration information is configuration information related to random access in a system information block SIB1 of the second cell; and
providing, by the second network device, a communication service for the terminal device in the second cell by using the third configuration information.

16. The method according to any one of claims 9 to 15, wherein the first configuration information comprises any one or more of the following:
identifier information of the first cell;
access stratum configuration information of the first cell;
a system information block SIB1 of the first cell; or
a master information block MIB of the first cell.

17. The method according to any one of claims 14 to 16, wherein the second configuration information comprises any one or more of the following:
a key KgNB, wherein the key KgNB is used to determine a key of an access stratum;
a cell radio network temporary identifier C-RNTI;
a mapping relationship between a quality of service QoS flow and a data radio bearer DRB that are related to the terminal device;
capability information of the terminal device;
related information of a protocol data unit PDU session related to the terminal device; or
information other than a system information block SIB1 and a master information block MIB in a synchronization reconfiguration reconfigurationWithSync message.

18. The method according to any one of claims 9 to 17, wherein the related information of the PBCH of the first cell comprises any one or more of the following:
four least significant bits bits of a system frame number;
an absolute time corresponding to a system frame number of the first cell; or one most significant bit of an offset of a synchronization signal block SSB subcarrier, wherein the offset of the SSB subcarrier indicates a subcarrier offset of an SSB between a subcarrier 0 of a common resource block CRB and a subcarrier 0 of the SSB;
a quantity of SSBs of the first cell; or
half-frame indication information, wherein the half-frame indication information indicates whether an SSB is carried in a first half frame or a second half frame.

19. The method according to any one of claims 15 to 18, wherein the third configuration information comprises any one or more of the following information:
a random access-common configuration rach-ConfigCommon information element, or a synchronization signal block-burst position ssb-PositionsInBurst information element, wherein
the rach-ConfigCommon information element comprises any one or more of the following information: a random access RACH parameter for random access or beam recovery, a parameter for sending a preamble preamble, or a mapping relationship between a preamble and a synchronization signal block; and
the ssb-PositionsInBurst information element comprises time information for sending a synchronization signal block.

20. A non-terrestrial network communication method, wherein the method is applied to a terminal device, and the method comprises:
receiving first indication information sent by a first network device, wherein the first indication information indicates that a first cell of the first network device supports the terminal device to be handed over from the first cell of the first network device to a second cell of a second network device in a handover without L3 signaling mode, and the second cell is a to-be-handed-over cell of the terminal device; and
reading, by the terminal device, system information of the second cell sent by the second network device.

21. The method according to claim 20, wherein reading, by the terminal device, the system information of the second cell sent by the second network device comprises:
receiving a second identifier sent by the second network device, wherein the second identifier identifies the system information of the second cell;
detecting whether the second identifier is consistent with a first identifier locally stored by the terminal device, wherein the first identifier identifies system information of the first cell; and
if the second identifier is inconsistent with the first identifier, reading, by the terminal device, the system information of the second cell sent by the second network device.

22. The method according to claim 20, wherein reading, by the terminal device, the system information of the second cell sent by the second network device comprises:
receiving a second identifier sent by the second network device, wherein the second identifier identifies the system information of the second cell; and
ignoring the second identifier, and reading, by the terminal device, the system information of the second cell sent by the second network device.

23. The method according to claim 21 or 22, wherein receiving, by the terminal device, the second identifier sent by the second network device comprises:
receiving the system information of the second cell sent by the second network device, wherein the system information of the second cell comprises the second identifier.

24. A communication apparatus, comprising a transceiver module and a processing module, wherein
the transceiver module is configured to: input and/or output signaling or data; and
the processing module is configured to perform, by using a communication unit, the method according to any one of claims 1 to 8, the method according to any one of claims 9 to 19, or the method according to any one of claims 20 to 23.

25. A communication apparatus, comprising a communication interface and a processor, wherein
the communication interface is configured to: input and/or output signaling or data; and
the processor is configured to execute a computer-executable program, so that the method according to any one of claims 1 to 8 is performed, the method according to any one of claims 9 to 19 is performed, or the method according to any one of claims 20 to 23 is performed.

26. A communication apparatus, comprising a processor and a memory, wherein
the memory is configured to store a computer program or instructions; and
the processor is configured to execute the computer program or the instructions in the memory, so that the method according to any one of claims 1 to 8 is performed, the method according to any one of claims 9 to 19 is performed, or the method according to any one of claims 20 to 23 is performed.

27. A computer-readable storage medium, comprising instructions, wherein when the instructions are executed by a processor, the method according to any one of claims 1 to 8, the method according to any one of claims 9 to 19, or the method according to any one of claims 20 to 23 is implemented.

28. A computer program product, comprising a program, wherein when the program is executed by a processor, the method according to any one of claims 1 to 8, the method according to any one of claims 9 to 19, or the method according to any one of claims 20 to 23 is implemented.

29. A chip system, wherein the chip system comprises at least one processor, and when program instructions are executed in the at least one processor, the method according to any one of claims 1 to 8, the method according to any one of claims 9 to 19, or the method according to any one of claims 20 to 23 is implemented.
